# EUROPEAN PATENT APPLICATION

(11) **EP 4 309 830 A1**
(43) Date of publication of application: **24.01.2024**
(21) Application number: 23180580.5
(22) Date of filing: 21.06.2023
(51) Int. Cl.: B22F 10/28, B22F 12/37, B29C 64/153, B29C 64/245, B33Y 10/00, B33Y 30/00, B22F 12/55, B22F 12/45

(54) **APPARATUS AND METHOD**

(30) Priority: 21.07.2022 GB 202210688
(71) Applicant: Rolls-Royce plc, London N1 9FX (GB)
(72) Inventor: Harding, Stephen C, Derby, DE24 8BJ (GB)
(74) Representative: Rolls-Royce plc

(57) **Abstract**

Disclosed is an apparatus for the additive manufacture of a component comprising: a bed for supporting the component; a powder depositor; an energy beam source for emitting a beam of energy towards a beam target location; and control means for adjusting the beam target location; wherein the apparatus is configured to provide rotation of the beam target location and/or the powder depositor relative to the bed, the relative rotation being about a rotational axis. Also disclosed are an additive manufacture apparatus comprising a substantially annular bed, a method for additive manufacture, a gas turbine engine, and an aircraft.

## Description

### TECHNICAL FIELD

This disclosure concerns apparatus and methods for the additive manufacture of a component.

### BACKGROUND

Existing additive manufacture systems manufacture parts by printing onto a baseplate, sequentially adding a layer of powder, writing the part on that layer using an energy source and then re-coating to enable the next layer to be printed.

A significant portion of the lead time (and cost) associated with additive manufacture arises from the re-coating and writing time. In addition, additive manufacture baseplate sizes are generally constrained by the ability to extract melt effluent or smoke without disturbing the powder layer or impacting the laser.

It will be understood that improvements in additive manufacture apparatus are desirable.

### Summary

According to a first aspect of the present disclosure, there is provided an apparatus for the additive manufacture of a component comprising: a bed for supporting the component; a powder depositor; an energy beam source for emitting a beam of energy towards a beam target location; and control means for adjusting the beam target location; wherein the apparatus is configured to provide rotation of the energy beam location and/or the powder depositor relative to the bed, the relative rotation being about a rotational axis.

The energy beam source may emit a beam of energy towards the beam target location to melt or sinter any powder at the beam target location. The energy beam source may melt or sinter any powder at the beam target location to produce a solid material. The solid material may define a working surface upon which powder can be deposited. The bed may be considered as a working surface before the deposition of the first layer of powder. The powder depositor may deposit powder onto the working surface, such as the bed or the solid material of the component. The process of depositing the powder may be known as recoating.

The process of melting or sintering the powder at the beam target location of the energy beam source may be known as writing. The apparatus may provide an advantage of being able to perform the recoating and/or writing process continuously and simultaneously, rather than in a sequential process producing discrete layers, thereby increasing the productivity, and reducing cost and lead time.

The rotational axis may define a coordinate system comprising an axial direction along the axis, a radial direction outwards from the axis and a circumferential direction in the direction of rotation about the axis. The bed may define a plane. The plane of the bed may be substantially horizontal in use. The axial direction may define a height or depth direction. The axial direction may be substantially vertical in use.

The beam target location may be a location defined by a radial and circumferential position. The beam target location may be a location defined by a radial and circumferential position of the bed or working surface of the component.

By providing relative rotation between the energy beam location and the bed, the beam target location may be adjusted in the circumferential direction. The control means may be configured for adjusting the beam target location in a direction having at least a radial component. The control means may adjust the beam target location by adjusting the position of a deflector or mirror. The control means may provide relative rotation by adjusting the energy beam location in the circumferential direction. The control means may be configured for adjusting the beam target location in a direction having a circumferential component. This may provide the relative rotation between the bed and the beam target location. The movement of the beam target location may define a beam target path. The beam target path may be defined by an algorithm based upon the shape of the desired component.

The energy beam source may be rotatable about the axis to adjust the beam target location. The control means may be configured to rotate the energy beam source about the axis to adjust the beam target location.

The powder depositor and the bed may be configured to rotate relative to one another about the rotational axis. The powder depositor may extend in a radial direction above the working surface. The powder depositor may comprise a hopper for dispensing the powder. The hopper may extend in a radial direction above the working surface. The powder depositor may comprise a recoating blade to distribute the deposited powder on the working surface. The recoating blade may produce a densely packed, flat layer of powder. The recoating blade may extend in a radial direction above the working surface.

The apparatus may further comprise an extraction mechanism to remove effluent emitted during the writing process.

The apparatus may be scalable to manufacture a range of component sizes from small to very large. The apparatus may enable the production of very large components that are otherwise difficult or impossible to manufacture. The apparatus may overcome the problem of large components requiring a large printing area. This may enable large components to be manufactured with small machine size quality.

The apparatus may enable reduced powder consumption for large component manufacture. The apparatus may enable increased manufacture speed. Manufacture speed may be measured in terms of the weight of powder deposited over time (e.g., in kg deposited per hour).

The apparatus may be configured to provide rotation of the beam target location and the powder depositor relative to the bed.

The apparatus may comprise a recoating and writing unit, which may comprise the energy beam source and the powder depositor. The recoating and writing unit may be configured to rotate relative to the bed about the rotational axis. This may provide an advantage that the apparatus can be used to perform the recoating and writing process substantially simultaneously and continuously, rather than in a sequential layer process as in a conventional apparatus, thereby increasing the productivity, and lowering cost and lead time. The recoating and writing unit may extend in a radial direction above the working surface. The bed may be configured to rotate about the axis whilst the recoating and writing unit remains substantially stationary, or the recoating and writing unit may be configured to rotate about the axis whilst the bed remains stationary.

The apparatus may comprise a plurality of recoating and writing units. By providing a plurality of recoating and writing units, the time taken to manufacture a component may be reduced. The number of recoating and writing units may be adjustable, i.e., selectable by the user. The recoating and writing units may be arranged at different circumferential positions.

The bed may comprise rotational means for rotating the bed about the rotational axis to provide the relative rotation.

The apparatus may comprise height-adjusting means for adjusting the relative axial position of the bed and the powder depositor. This may enable the bed and the powder depositor to be moved away from one another during manufacture of the component. This may maintain the same separation between the working surface (i.e., the uppermost solid surface of the component) and the powder depositor as the component is built up. The height-adjusting means may comprise a motor. The height may be adjusted continuously or in steps. The powder depositor and the energy beam source may be fixed in position relative to one another, for example as part of a recoating and writing unit. The height-adjusting means may adjust the relative axial position of the bed and the energy beam source.

The height-adjusting means may be configured to continuously adjust the relative axial position of the bed and powder depositor. This may improve the efficiency of the manufacture of the component. The height-adjusting means may be configured to continuously adjust the relative axial position of the bed and powder depositor away from one another. The rate of the height adjustment may be adjustable. The rate of the height adjustment may be adjustable depending on the number of re-coating/laser writing units operating in the apparatus. The rate of relative rotation may be determined by a rotation sensor. The rate of the height adjustment may be adjustable depending on the sensor measurement of the rate of rotation. The rate of the height adjustment may be adjustable depending on the speed of writing in a given part of the component. For instance, a larger and/or more complex component may take longer to write and may need a slower rate of rotation. As the component is manufactured, as the relative axial position is moved continuously, the working surface may define a spiral or helix shaped surface.

The height-adjusting means may be configured to incrementally adjust the relative axial position of the bed and powder depositor. The bed may be incrementally rotated and lowered, before sequentially writing the component with the energy beam and then recommencing another incremental rotation, bed lowering and recoating operation.

The height-adjusting means may be configured to adjust the relative axial position of the bed and powder depositor by moving the bed substantially vertically downwards during manufacture of the component. The powder depositor and/or energy beam source may be substantially fixed in an axial position during manufacture of the component.

According to a second aspect of the present disclosure, there is provided an apparatus for the additive manufacture of a component comprising a bed upon which powder can be deposited, wherein the bed is substantially annular. By providing an annular bed, it may be possible to produce a large substantially annular component in a more efficient manner by minimising the wastage of material and the processing time. The surface area of the bed may be reduced when compared to a non-annular component of similar dimensions. The writing area of the bed may be small relative to the size of the component. This may avoid requiring a bed area which is equal to or larger than the size of the component. This may be advantageous since the distance from the beam target location to the edge of the bed area may be small. This may enable more efficient removal of melt effluent or smoke from the volume defined by the apparatus, less beam distortion from moving the beam over a large area (or larger range of angles) and/or more accurate control of the deposition of powder. The total volume of powder needed to produce a component may be smaller than that of a component manufactured on an equivalent square bed. It will be understood that substantially annular here is not intended to cover only a shape defined by a precisely circular outer boundary and a precisely circular aperture, but may cover any bed comprising an aperture-like region defined by the bed upon which powder cannot be deposited. Non-limiting examples of substantially annular beds could include pentagonal, hexagonal or octagonal, etc., beds outer boundaries or apertures.

The apparatus may comprise a powder depositor for depositing powder onto the bed or onto a working surface of the component. The apparatus may comprise an energy beam source for emitting a beam of energy towards a beam target location. The apparatus may comprise control means for adjusting the beam target location. The movement of the beam target location may define a beam target path. The beam target path may be defined by an algorithm based upon the shape of the desired component.

The substantially annular bed may have an outer diameter and an inner diameter, and the outer diameter may be greater than or equal to 3 times the inner diameter. This may enable the manufacture of a continuous range of sizes of substantially annular parts.

It will be understood that the manufactured component does not have to be annular. Annular or non-annular components smaller than the inner diameter may be manufactured layer-by-layer (i.e., discretely as opposed to continuously) on the bed within the area defined between the outer and inner diameters. This would offer more flexibility of the recoating angle relative to any component geometry should this be preferred or required.

Components larger than the annulus inner diameter may be manufactured on the annulus in a continuous manner as described above. These components may be formed by a single helical continuous layer throughout the height of the component.

The substantially annular bed may have an outer diameter and an inner diameter, and the substantially annular bed may be adjustable to change the outer and/or inner diameter. This may enable the manufacture of a large range of sizes of substantially annular parts as desired. The substantially annular bed may be adjustable by means of removable or adjustable outer and inner walls. The inner diameter may be no less than 50mm. The inner diameter may be no less than 250mm. The outer diameter may be no greater than 5m. The outer diameter may be no greater than 2m.

According to a third aspect of the present disclosure, there is provided a substantially annular bed for use in the apparatus according to any of the above statements relating to the second aspect.

According to a fourth aspect of the present disclosure, there is provided an apparatus according to any one of the above statements relating to the first aspect and according to any one of the above statements relating to the second aspect. The centre of the annular bed may define the rotational axis.

The apparatus may be a powder bed laser additive manufacture apparatus, electron beam deposition additive manufacture apparatus or blown powder deposition additive manufacture apparatus. The energy beam source may be a laser beam or an electron beam. The powder may be a metal or an alloy, such as nickel or a nickel alloy, or may be a plastic, ceramic or a composite of materials.

According to a fifth aspect of the present disclosure, there is provided a method for additive manufacture of a component comprising: depositing powder from a powder depositor onto a bed; emitting a beam of energy from an energy beam source towards a beam target location, wherein the beam target location is adjustable by control means; providing relative rotation between the beam target location and/or the powder depositor relative to the bed about a rotational axis.

The bed may be substantially annular, and the rotational axis may be defined by the centre of the bed.

The deposition of powder, emission of energy, and relative rotation between the energy beam location and/or the powder depositor relative to the bed may be continuous during the manufacture of the entire component. The deposition of powder, emission of energy and relative rotation between the energy beam location and/or the powder depositor relative to the bed may be substantially simultaneous.

The method may comprise rotating the bed about the rotational axis. By rotating the bed about the rotational axis this may provide the relative rotation. The control means may adjust the beam target location based upon an algorithm which compensates for the relative rotation of the bed using the rotational sensor.

The method may comprise adjusting the relative axial position of the bed and the powder depositor using height-adjusting means. The position of the bed may be moved away from the powder depositor as the component is built up.

The height-adjusting means may adjust the height at a rate dependent upon the rate of relative rotation as determined by the rotation sensor. The height-adjusting means may continuously adjust the relative axial position of the bed and the powder depositor during manufacture of the component.

The height-adjusting means may adjust the height at a rate dependent upon the number of recoating and writing units present in the apparatus. The rate of height adjustment may be defined as one layer in height per recoating/writing unit per revolution. One revolution may be defined as when the bed and the beam target location have completed a full 360-degree rotation relative to one another about the axis.

According to a sixth aspect of the present disclosure, there is provided a computer program comprising instructions which, when the program is executed by a computer, cause the computer to carry out the method of any of the statements relating to the fifth aspect.

There may be provided a computer-readable storage medium comprising instructions which, when executed by a computer, cause the computer to carry out the method of any of the statements relating to the fifth aspect.

There may also be provided a computer implemented method comprising any method steps of the statements relating to the fifth aspect.

There may be provided a data processing system comprising means for carrying out the method steps of the statements relating to the fifth aspect.

According to a seventh aspect of the present disclosure, there is provided a method of additive manufacture of a component comprising depositing a powder on a substantially annular bed.

According to an eighth aspect of the present disclosure, there is provided a component obtained according to the method of any of the statements relating to the fifth aspect. The component may be a casing, combustor wall, outlet guide vane assembly, jet pipe, combustor head, combustor meter panel, combustor cowl, manifold, annular structural assembly, or any other axisymmetric component.

According to a ninth aspect of the present disclosure, there is provided a gas turbine engine for an aircraft, the gas turbine engine comprising a component according to the eighth aspect.

According to a tenth aspect of the present disclosure, there is provided a gas turbine engine according to the ninth aspect further comprising: an engine core comprising a turbine, a compressor, and a core shaft connecting the turbine to the compressor; a fan located upstream of the engine core, the fan comprising a plurality of fan blades; and a gearbox that receives an input from the core shaft and outputs drive to the fan so as to drive the fan at a lower rotational speed than the core shaft.

According to an eleventh aspect of the present disclosure, there is provided a gas turbine engine according to the tenth aspect, wherein: the turbine is a first turbine, the compressor is a first compressor, and the core shaft is a first core shaft; the engine core further comprises a second turbine, a second compressor, and a second core shaft connecting the second turbine to the second compressor; and the second turbine, second compressor, and second core shaft are arranged to rotate at a higher rotational speed than the first core shaft.

According to a twelfth aspect of the present disclosure, there is provided aircraft comprising a gas turbine engine according to any of the statements relating to the ninth, tenth or eleventh aspects.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox may be a reduction gearbox (in that the output to the fan is a lower rotational rate than the input from the core shaft). Any type of gearbox may be used. For example, the gearbox may be a "planetary" or "star" gearbox.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

According to a further aspect of the present disclosure, there is provided an aircraft comprising a cabin blower system or a gas turbine engine as described and/or claimed herein.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

### BRIEF DESCRIPTION OF THE DRAWINGS

Embodiments will now be described by way of example only with reference to the accompanying drawings, which are purely schematic and not to scale, and in which:
**Figure 1** is a part-sectional view of a gas turbine engine;
**Figure 2** is a schematic perspective view of an example apparatus for additive manufacture;
**Figure 3** is a schematic perspective view of an example apparatus for additive manufacture;
**Figure 4** is a schematic perspective view of an example apparatus for additive manufacture;
**Figure 5** is a schematic diagram of a method for additive manufacture;
**Figure 6** is a schematic view of an apparatus and component during additive manufacture;
**Figure 7** is a schematic perspective view of a component manufactured by additive manufacture;
**Figure 8a** is a schematic plan view of an example bed of an apparatus for additive manufacture;
**Figure 8b** is a schematic perspective view of a component manufactured by additive manufacture;
**Figures 9a and 9b** **are** schematic cross-sectional perspective views of an example bed of an apparatus for additive manufacture; and
**Figure 10** is a schematic perspective view of an apparatus for additive manufacture.

### DETAILED DESCRIPTION

### Figure 1

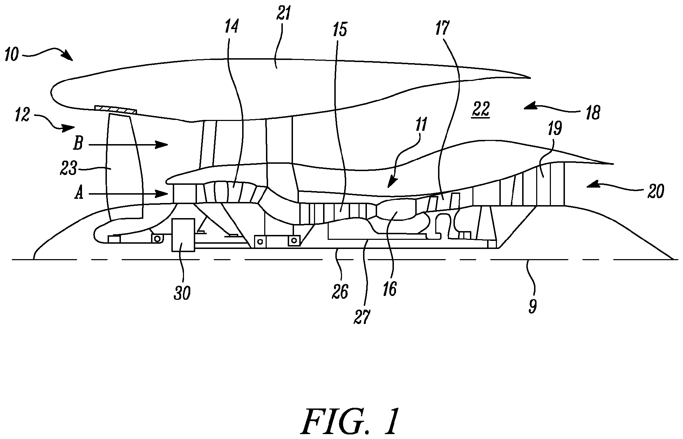

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low-pressure compressor 14, a high-pressure compressor 15, combustion equipment 16, a high-pressure turbine 17, a low-pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low-pressure turbine 19 via a shaft 26 and an epicyclic gearbox 30.

In use, the core airflow A is accelerated and compressed by the low-pressure compressor 14 and directed into the high-pressure compressor 15 where further compression takes place. The compressed air exhausted from the high-pressure compressor 15 is directed into the combustion equipment 16 where it is mixed with fuel and the mixture is combusted. The resultant hot combustion products then expand through, and thereby drive, the high pressure and low-pressure turbines 17, 19 before being exhausted through the nozzle 20 to provide some propulsive thrust. The high-pressure turbine 17 drives the high-pressure compressor 15 by a suitable interconnecting shaft 27. The fan 23 generally provides the majority of the propulsive thrust. The epicyclic gearbox 30 is a reduction gearbox.

Figure 1 also shows a control system 100 for the engine 10. The control system 100 comprises a controller 102 configured to control the various functions of the engine 10 and, more generally, a wider engine system 1 comprising the engine 10. The control system 100 is in communication with a control input system 104 through which a human operator of the aircraft can provide control inputs for the control system 100. Also in communication with the control system 100 are various sensors and systems, which will be referred to herein as the condition and context system 106. The condition and context system comprises various sensors and systems which provide the control system 100 with information and data regarding the operating condition of the aircraft and regarding contextual conditions relevant to the aircraft.

### Figure 2

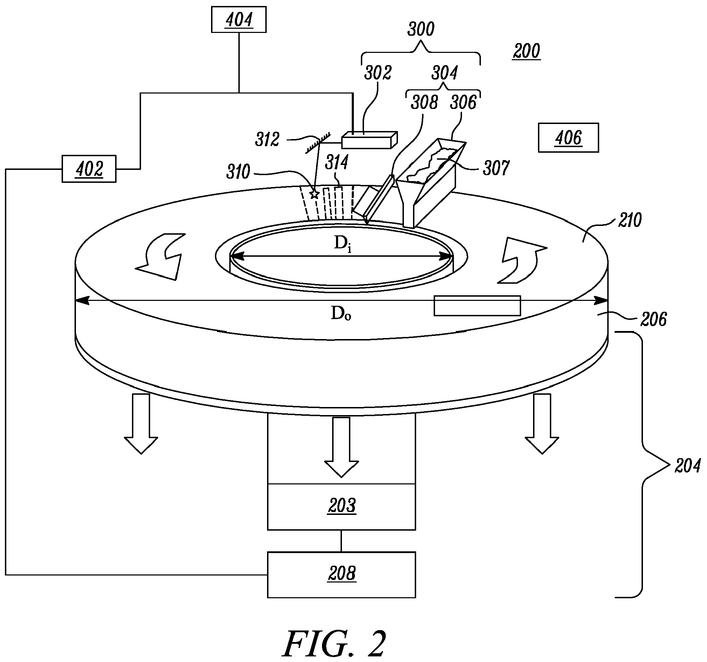

An apparatus 200 for the additive manufacture of a component 206, such as a component for a gas turbine engine 10, will now be described with reference to Figure 2. The apparatus 200 comprises a bed 204, a powder depositor 304 and an energy beam source 302 for emitting a beam of energy towards a beam target location 310. The apparatus 200 also comprises an extraction device 406 for removing effluent from the apparatus.

The bed 204, in this example an annular bed, comprises a surface upon which powder 307 can be deposited by the powder depositor 304. The bed 204 is rotatable about an axis, in this example defined by the centre of the annular bed, as will be discussed in further detail below. Although we have discussed the deposition of powder 307 onto a bed 204 here, it will be appreciated that as the component 206 is built up and the bed 204 is covered, the powder 307 is deposited on a surface 210 of the component 206 rather than the bed 208. The term "working surface" is intended to cover both the bed 204 and a surface of the component 210 upon which powder 307 may be deposited to form a layer of the component 206.

The powder depositor 304 comprises a hopper 306 and a recoating blade 308. The hopper 306 stores and deposits the powder 307 and the recoating blade 308 distributes the powder 307 to provide a densely packed even surface of specified height (layer thickness). The axial distance between the recoating blade 308 and the working surface 204, 210, defines a thickness T_{L} of a layer of powder 207.

The energy beam source 302 is provided to melt or sinter the powder 307 at the beam target location 310. Control means 400 are provided to control the operation of the energy beam source 302, such as the beam target location 310, beam size and the intensity of the energy beam. The control means 400 is operable to adjust a deflector 312, such as a mirror, to adjust the beam target location 310 along a beam target path 314. The control means 400 receives instructions relating to the component 206 from an input source 404, such as a CAD model. The instructions include a desired beam target path 314 which the beam target location 310 follows. The control means controls the energy beam source 302 to melt or sinter the powder 307 along the desired beam target path 314 according to the instructions. In this example, the powder 307 is a metallic powder and the energy beam source 302 is a laser beam source.

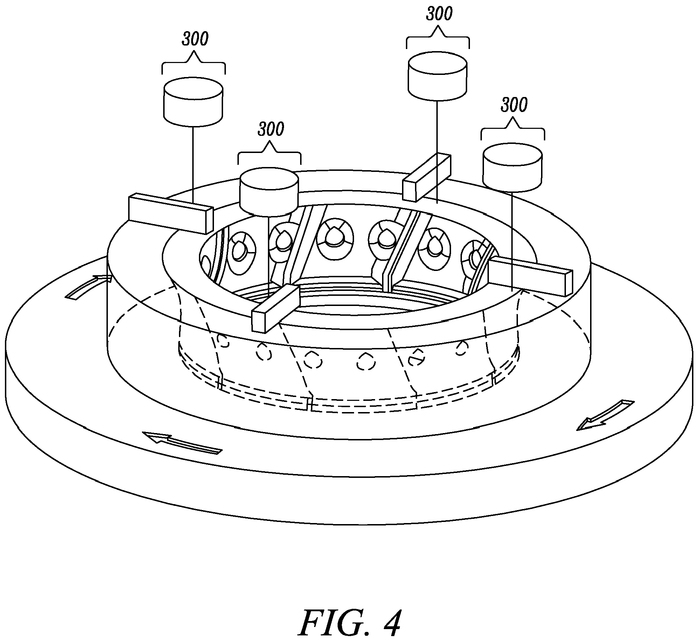

As mentioned above, the bed 208 is rotatable about an axis during manufacture of the component 206. The bed 204 comprises means for rotating the bed 204, such as a rotational motor 203. The bed 208 is rotated in the direction indicated by the arrow in Figure 4.

The apparatus 200 also comprises height adjusting means 208 for continuously lowering the height of the bed 208 as the component 206 is built up. In this way, the distance between the working surface 204, 210 and the powder depositor 304 is maintained, so that the thickness of the layer T_{L} remains the same as the component 206 is built up.

The apparatus comprises a sensor 402 for monitoring the rate of rotation of the bed. The data from the sensor 402 is input to the control means 400 to control the adjustment of the beam target location 312 along the beam target path 314. The data from the sensor 402 is also input to the height-adjusting means 208 to control the lowering rate of the bed 204.

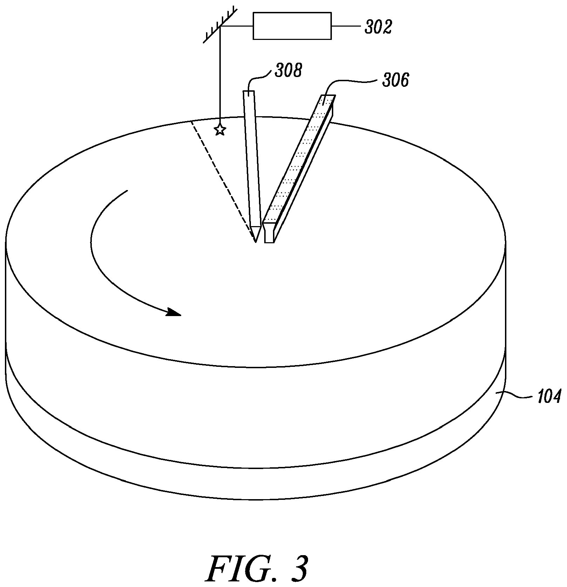

Although an annular bed is shown here, it will be appreciated that in other examples the bed may not be annular, and the rotational recoating and/or writing capability could be applied to a non-annular bed. Such a bed would contain an outer wall but no inner wall. For example, the bed may be a circular bed 104 as shown in the apparatus of Figure 3, or may be a square or any other shaped bed, and such a bed may be used to manufacture a non-annular component by rotational recoating and/or writing. When describing the shape of the bed, we are describing the shape of the surface (e.g., the upper surface) upon which powder can be deposited.

The powder depositor 304 and the energy beam source 302 together form a recoating and writing unit 300. As shown in Figure 4, the apparatus 200 may comprise a plurality of, in this example four, recoating and writing units 300. For each additional recoating and writing unit 300 provided in the apparatus, the time taken to manufacture the component will be reduced. The number of recoating and writing units 300 present in the apparatus, along with data relating to the rate of rotation, is input to the height-adjusting means 208 in order to control the lowering rate of the bed 204. The lowering rate of the bed is defined as one layer thickness T_{L} in height per unit, per complete revolution (i.e., 360 degrees) of the bed. In other examples, if two or more layers of powder are recoated at the same time, and two or more layers of powder are subsequently written at the same time, the lowering rate of the bed may be defined as two or more layers of thickness T_{L} in height per unit, per complete revolution of the bed.

The dimensions of the annular bed are defined by an inner diameter Dᵢ and an outer diameter Dₒ, defined by inner and outer walls. The inner diameter Dᵢ and outer diameter Dₒ may be adjustable as will be described in further detail below.

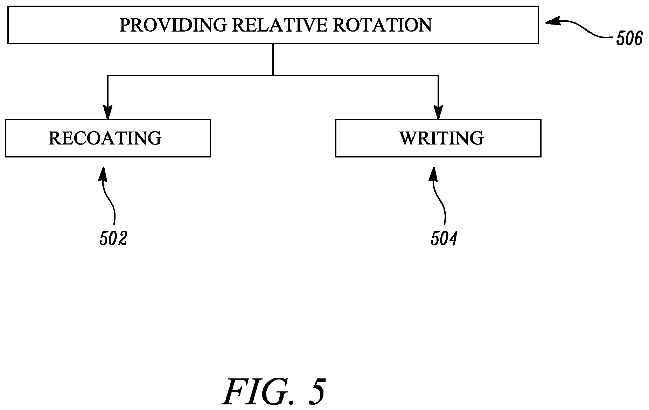

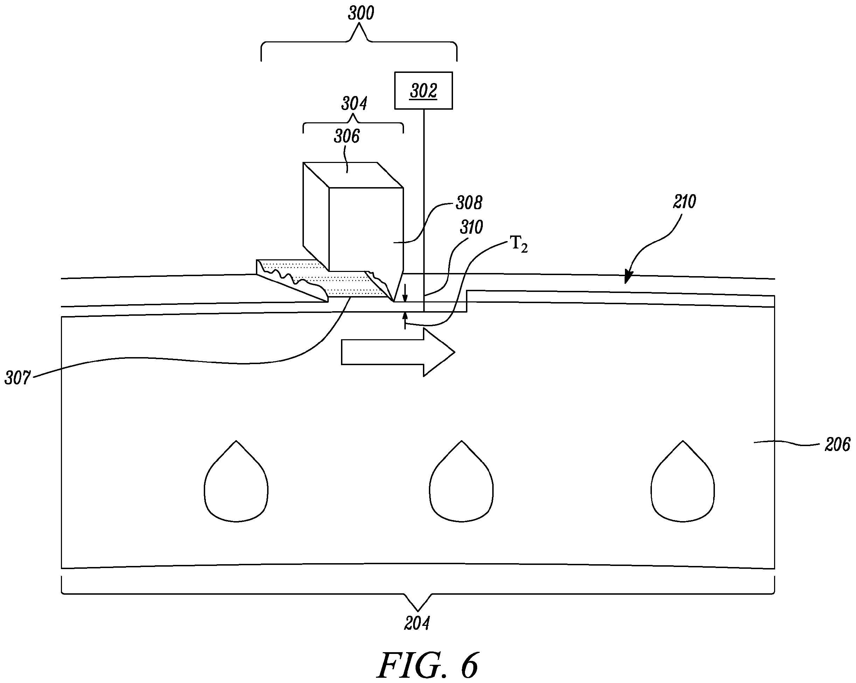

A method of manufacturing a component will now be described with reference to Figures 5, 6a and 6b.

As shown in Figures 5 and 6a, the method 500 comprises a "recoating" step including depositing 502 a powder 307 from a powder depositor 304 onto a working surface 210. In Figure 6a, the method 500 is shown at a point during manufacture of the component 206 when a portion of the component 206 has already been formed, and the working surface 210 is a surface of the component 206. However, it will be appreciated that at the start of the manufacture of the component 206, the powder 207 will be deposited directly onto the bed 204 and the working surface will be the bed 204.

The powder depositor 304 comprises a hopper 306, from which the powder 307 is deposited onto the working surface 210. The recoater blade 308 passes over the deposited powder 307 to distribute the deposited powder 307 evenly over the working surface 210. In Figure 6a, the hopper 306 and the recoating blade 308 are integrated into a single depositor unit, which extends across the entire width of the annulus (i.e., between the outer and inner diameters). The recoating blade 308 produces a densely packed even layer of powder 307. It will be understood that as the bed 204 rotates in the direction of the arrow, as will be further discussed, the powder 307 will be deposited by the hopper 306, followed by distribution by the recoater blade 308, as the bed 204 rotates underneath the powder depositor 304. The distance between the working surface 210 and the recoater blade 308 defines a layer thickness T_{L} of the powder and, subsequently, the component 206.

In this example, the bed 204 is substantially annular, but as described above, the bed 204 may be any other suitable shape, such as substantially square or circular.

The method further comprises a writing step comprising emitting 504 a beam of energy from an energy beam source 302 towards a beam target location 310. Any powder 307 at the beam target location 310 will be sintered or melted in order to form a portion of the component 206, hence the term "writing". Together, the energy beam source 302 and the powder depositor 304 define a recoating and writing unit 300.

As the recoating and writing are taking place, the beam target location and the powder depositor 304 are rotated 506 relative to the bed about a rotational axis. In this example, the bed 204 is rotated about an axis defined by its centre point, relative to the recoating and writing unit 300 in the direction indicated by the arrow, in order to produce this relative rotation. It will be understood that by rotating the bed 204, the component 206 on the bed 204 will also be rotated.

As the bed 204 rotates, the powder 307 which has been deposited will, after distribution by the recoater blade 308, be written according to the required geometry of the component 206. Control means as described above are used to adjust the beam target location along a beam target path 314 in accordance with instructions based upon a desired component shape to selectively build up the geometry of the component 206. The control means receive instructions from an input, such as a CAD model, which contains data regarding the desired geometry of the component and adjust the beam target location accordingly. In this example, the rotation of the bed adjusts the beam target location 310 in a circumferential direction and the control means adjusts the beam target location 310 in a substantially radial direction along the beam target path 314.

As the bed 204 rotates, the above-described height adjusting means 208 operate to move the bed 204 vertically downwards. In this way, the relative distance between the bed 204 and the recoating and writing unit 300 increases as the component 206 is built up, and the relative distance between the surface 210 upon which powder is to be deposited and the powder depositor 304 remains substantially the same. This may make it easier to achieve a consistent layer thickness T_{L} throughout the component 206.

As the process is carried out, the recoating 502, the writing 504 and the rotation 506 take place substantially continuously and simultaneously as the component 206 is built up. It will be understood that at the very beginning of the manufacture of the component 206, the powder 207 is deposited 502 before the bed 204 is rotated and the beam of energy is directed towards the powder 207 to write 504 the powder, however for the majority of the manufacture process, the steps will operate simultaneously. In this way, the lead time for additive manufacture of a component 206 may be reduced.

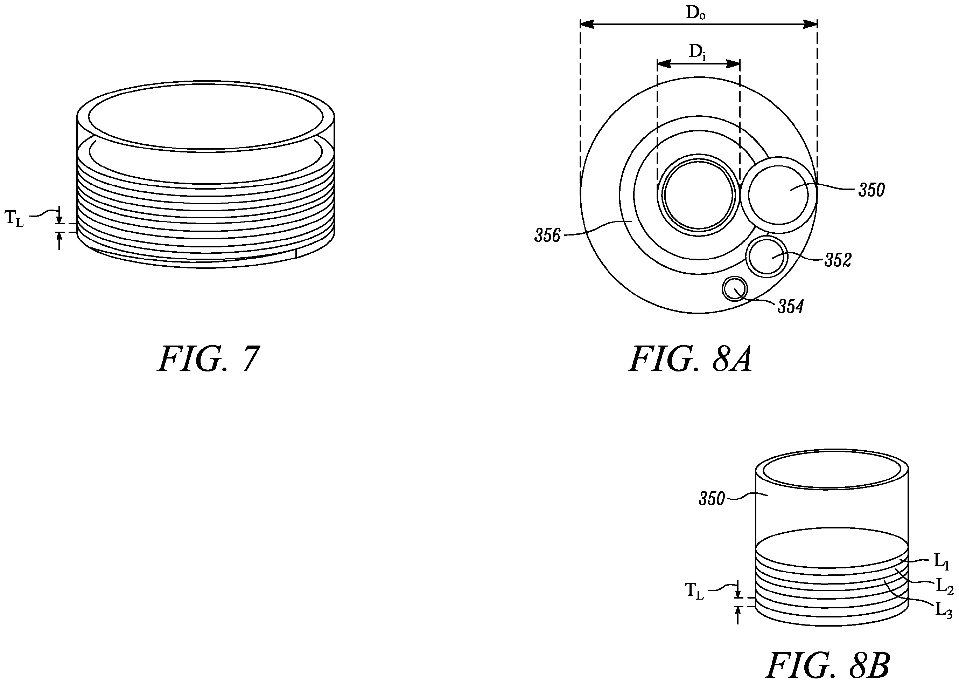

Furthermore, as the component 206 is built up, it will be understood that the powder no longer deposits powder 207 onto the bed 204 itself, but after a full revolution of the bed 204 has been completed, the powder 207 will be deposited onto a surface 210 of the component 206 itself. The term working surface is intended to cover the bed 204 before the first layer of powder is deposited upon the bed 204, as well as the subsequent layers of the component surface 210 upon which powder 207 is deposited as the component 206 is built up. It will be understood that as the part is rotated, the component 206 will be built up in a spiral or helical shape having a layer thickness T_{L}, as shown in Figure 7.

The dimensions of the annular bed are defined by an inner diameter Dᵢ and an outer diameter Dₒ. In one example, shown in Figure 8a, the outer diameter Dₒ is greater than three times that of the inner diameter Dᵢ. This enables a continuum of annular component sizes to be manufactured. For instance, a series of annular or any other shaped components 350, 352, 354 having an external diameter smaller than the inner diameter Dᵢ of the bed can be manufactured within one section of the annulus, as shown in Figure 8a. Such a component may be manufactured by conventional layer by layer additive manufacturing, where the component is built up by a series of discrete layers, as shown in Figure 8b.

For a component having an external diameter larger than Dᵢ, such as the component shown at 356 in Figure 8a, this can be manufactured around the annulus as described above with reference to Figures 1-6. The component is built up in a single helical layer as shown in Figure 7.

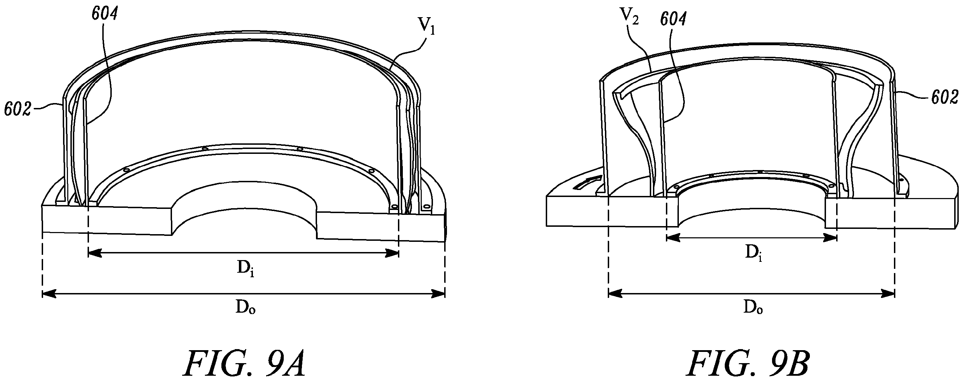

As shown in Figures 9a and 9b, the apparatus comprises an inner wall 604 and an outer wall 602. The inner wall 604 defines the inner diameter Dᵢ of the bed, and the outer wall 602 defines the outer diameter Dₒ of the bed. Between the inner and outer walls, 604, 602, the surface area of the bed and the build volume V is defined.

In some examples, the dimensions of the inner wall 604 and the outer wall 602 can be adjustable to be tailored to the dimensions of the component which is to be built on the bed, such as by selecting an inner wall 604 and an outer wall 602 from a range of walls having different diameters and installing these on the bed. For instance, as shown in Figure 9a for a component having a narrower width in the radial direction, the difference between the inner diameter defined by the inner wall and the outer diameter defined by the outer wall may be small, giving a smaller build volume V1. In contrast, in Figure 9b, a component having a greater width in the radial direction is shown, and the inner wall 604 and the outer wall 602 have different diameters to account for the geometry of the component. A larger build volume V2 is defined as shown in Figure 9b. By adjusting the dimensions of the inner wall 604 and the outer wall 602, the surface area of the bed, and therefore the build volume V can be adjusted. For a smaller build volume, the removal of effluent or smoke from the volume may be generally more efficient. In addition, by tailoring the dimensions of the bed to the component, this may reduce the wastage of powder and provide for a more time and cost-efficient manufacture.

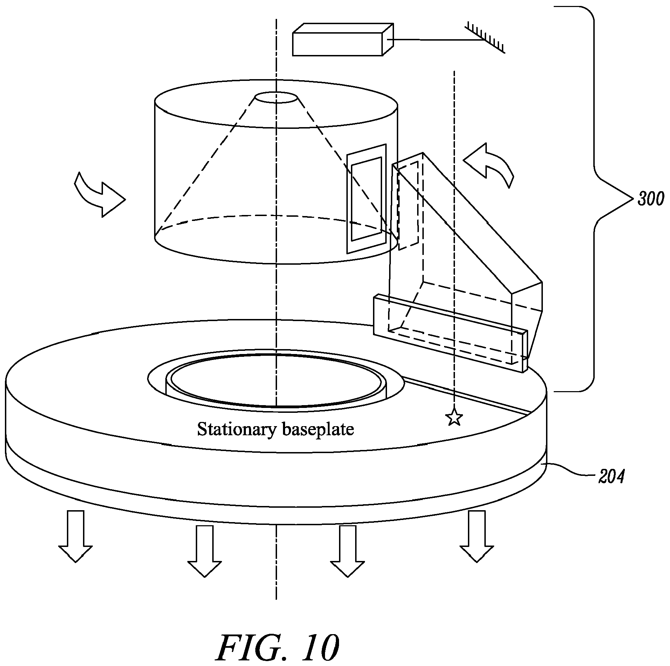

As described above, the relative rotation between the bed 204 and the recoating and writing unit 300 is provided by rotation means to rotate the position of the bed 204. However, in other examples, this relative rotation may be provided by rotating the position of the recoating and writing unit 300 as shown in Figure 10.

One method may involve operating the annular additive manufacture machine continuously such that writing is performed simultaneously with the recoating and the axial lowering movement of the bed is continuous. An algorithm may be used to compensate for the motion of the bed at the point of writing to precisely position the energy beam. Alternatively, the bed may be incrementally rotated and lowered, before sequentially writing the component with the energy beam and then recommencing another incremental rotation, bed lowering and recoating operation.

In another configuration the laser writing could be performed by a flash lamp, melting operation which melts the required part of the layer in one single operation rather than a steered energy beam.

The annular additive manufacture machine could also be applied to blown powder deposition whereby no powder hopper or recoating is required, since the powder is blown onto the surface simultaneously with writing. The benefits of the scalability of the device, small region of printing and speed are retained.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein. The scope of protection is defined in the appended claims.

## Claims

1. An apparatus (200) for the additive manufacture of a component (206) comprising:
a substantially annular bed (204) for supporting the component (206),
a powder depositor (304);
an energy beam source (302) for emitting a beam of energy towards a beam target location (310); and
control means (400) for adjusting the beam target location (310);
wherein the apparatus (200) is configured to provide rotation of the beam target location (310) and/or the powder depositor (304) relative to the bed (204), the relative rotation being about a rotational axis.

2. An apparatus (200) according to Claim 1, wherein the apparatus (200) is configured to provide rotation of the beam target location (310) and the powder depositor (304) relative to the bed (204).

3. An apparatus (200) according to Claim 2, comprising a recoating and writing unit (300) comprising the energy beam source (302) and the powder depositor (304), and wherein the recoating and writing unit (300) is configured to rotate relative to the bed (204) about the rotational axis, optionally wherein the apparatus (200) comprises a plurality of recoating and writing units (300), the recoating and writing units (300) arranged at different circumferential positions.

4. An apparatus (200) according to any one of the preceding claims, wherein the bed (204) comprises rotational means for rotating the bed (204) about the rotational axis.

5. An apparatus (200) according to any one of the preceding claims, further comprising height-adjusting means (208) for adjusting the relative axial position of the bed (204) and the powder depositor (304).

6. An apparatus (200) according to Claim 5, wherein the height-adjusting means (208) are configured to continuously adjust the relative axial position of the bed (204) and powder depositor (304).

7. An apparatus (200) according to Claim 5 or Claim 6, wherein the height-adjusting means (208) are configured to adjust the relative axial position of the bed (204) and powder depositor (304) by moving the bed (204) substantially vertically downwards during manufacture of the component (206).

8. An apparatus (200) according to any one of the preceding claims wherein the substantially annular bed (204) has an outer diameter Dₒ and an inner diameter Dᵢ, wherein the outer diameter is greater than or equal to 3 times the inner diameter.

9. An apparatus (200) according to any one of the preceding claims wherein the substantially annular bed (204) has an outer diameter Dₒ and an inner diameter Dᵢ, and wherein the annular bed (204) is adjustable to change the outer and/or inner diameter.

10. A method for additive manufacture of a component (206) comprising the steps of:
depositing powder from a powder depositor (304) onto a bed (204) for supporting the component (206);
emitting a beam of energy from an energy beam source (302) towards a beam target location (310), wherein the beam target location (310) is adjustable by control means; and
providing relative rotation between the beam target location (310) and/or the powder depositor (304) relative to the bed (204) about a rotational axis.

11. A method according to Claim 10, wherein the bed is substantially annular and the rotational axis is defined by the centre of the bed (204).

12. A method according to Claim 10 or Claim 11, wherein the deposition of powder, emission of energy, and relative rotation between the energy beam location (310) and/or the powder depositor relative to the bed (204) are continuous during the manufacture of the entire component (206).

13. A method according to any one of Claims 10 to 12, comprising rotating the bed (204) about the rotational axis.

14. A method according to any one of Claims 10 to 13, comprising adjusting the relative axial position of the bed (204) and the powder depositor (304) using height-adjusting means (208).

15. A method according to Claim 14, wherein the height-adjusting means (208) continuously adjust the relative axial position of the bed (204) and the powder depositor (304).
